# EUROPÄISCHE PATENTANMELDUNG

(11) **EP 4 287 771 A1**
(43) Veröffentlichungstag der Anmeldung: **06.12.2023**
(21) Anmeldenummer: 23175385.6
(22) Anmeldetag: 25.05.2023
(51) Int. Cl.: H05B 6/64, F24C 7/08, H05B 6/70

(54) **VERFAHREN ZUM GAREN EINES GARGUTS IN EINER BESTIMMTEN GARZEIT**

(30) Priorität: 03.06.2022 DE 102022114160
(71) Anmelder: Topinox Sarl, 68270 Wittenheim (FR)
(72) Erfinder:
(74) Vertreter: Prinz & Partner mbB

(57) **Zusammenfassung**

Die Erfindung betrifft ein Verfahren zum Garen eines Garguts (12) mit zumindest zwei verschiedenen Energiequellen (16, 18) zum Garen des Garguts (12), deren Energieeintrag in das Gargut (12) eine unterschiedliche Eindringtiefe (22) hat, umfassend die Schritte:
- Auswählen eines Garpfads, mit dem das zu garende Gargut (12) gegart wird, wobei der Garpfad eine einzubringende Gesamtenergie umfasst, die durch die zumindest zwei verschiedenen Energiequellen (16, 18) in das Gargut (12) einzubringen ist, und wobei der Garpfad einen Solltemperaturverlauf eines Gargutkerns (24) umfasst;
- Bestimmen einer Ist-Temperatur des Gargutkerns (24) während eines ablaufenden Garvorgangs; und
- Regeln mindestens einer der beiden Energiequellen (16, 18) anhand des zumindest einen Solltemperaturverlaufs der Kerntemperatur sowie der Ist-Temperatur der Kerntemperatur unter Berücksichtigung der einzubringenden Gesamtenergie derart, dass die einzubringende Gesamtenergie eingehalten wird.

Ferner betrifft die Erfindung ein Gargerät (10).

## Beschreibung

Die Erfindung betrifft ein Verfahren zum Garen eines Garguts mit zumindest zwei verschiedenen Energiequellen zum Garen des Garguts, deren Energieeintrag in das Gargut eine unterschiedliche Eindringtiefe hat. Ferner betrifft die Erfindung ein Gargerät.

In Profi- bzw. Großküchen kommen Gargeräte zum Einsatz, die ein in einem Garraum des Gargeräts befindliches Gargut in unterschiedlicher Weise garen können. Neben den klassischen Verfahren, die mittels Heißluft und/oder Dampf (Konvektion) das Gargut garen, werden bei modernen Gargeräten häufig auch Mikrowellenquellen eingesetzt, die mittels elektromagnetischer Strahlung Energie in das Gargut einbringen, wodurch sich dieses erwärmt. Als Mikrowellenquellen für die elektromagnetische Strahlung (Mikrowellen) können Magnetrons sowie Halbleiterbauteile zum Einsatz kommen.

Es ist bekannt, dass Gargeräte mit mehreren verschiedenen Energiequellen eingesetzt werden können, um die Garzeit zu reduzieren und/oder das Garergebnis zu verbessern. Das Garen des Garguts findet dann durch einen Energiemix aus den einzelnen Energiequellen statt.

Hierbei ist es wünschenswert, dass die innere Gare und die äußere Gare zeitgleich erreicht werden, also sowohl eine gewünschte Kerntemperatur als auch Krustenbildung und/oder Oberflächentemperatur des Garguts zum selben Zeitpunkt, insbesondere dem Endzeitpunkt des Garprozesses, vorliegen.

Kommen beim Erwärmen von Lebensmittel zudem Energiearten mit unterschiedlichen Eindringtiefen in das Gargut zum Einsatz, so können die Oberfläche und das Produktinnere zumindest teilweise entkoppelt voneinander erwärmt werden bzw. Energie gezielt in das Produktinnere und in die äußere Schicht des Garguts eingebracht werden. Beispielsweise kann mittels Konvektion die Oberfläche, mittels Infrarotstrahlung (einige Millimeter Eindringtiefe) ein oberflächennaher Bereich und mittels Mikrowellenstrahlung (ca. 2 bis 3 cm Eindringtiefe) ein Innenbereich des Garguts gezielt erwärmt werden.

Die bisher bekannten Verfahren und Geräte bieten jedoch keine oder nur sehr eingeschränkte Möglichkeiten, zwei oder mehr Energiearten über deren eingebrachte Energiemengen miteinander zu verbinden, um einen optimalen Kompromiss aus dem Energiemix in Bezug auf das geforderte bzw. gewünschte Garergebnis in einer definierten Zeit zu finden.

Die Aufgabe der Erfindung ist es daher, eine einfache und kostengünstige Möglichkeit bereitzustellen, zwei oder mehr Energiearten bzw. zur Verfügung stehende Energiequellen mit unterschiedlicher Eindringtiefe bei einem Garvorgang so zu verwenden, dass ein hinsichtlich Garqualität sowie Garzeit optimales Ergebnis erzielt wird.

Die Aufgabe wird erfindungsgemäß gelöst durch ein Verfahren zum Garen eines Garguts mit zumindest zwei verschiedenen Energiequellen zum Garen des Garguts, deren Energieeintrag in das Gargut eine unterschiedliche Eindringtiefe hat. Das Verfahren weist zumindest die folgenden Schritte auf:
- Auswählen eines Garpfads, mit dem das zu garende Gargut gegart wird, wobei der Garpfad eine einzubringende Gesamtenergie umfasst, die durch die zumindest zwei verschiedenen Energiequellen in das Gargut einzubringen ist, und wobei der Garpfad einen Solltemperaturverlauf eines Gargutkerns umfasst;
- Bestimmen einer Ist-Temperatur des Gargutkerns während eines ablaufenden Garvorgangs; und
- Regeln mindestens einer der beiden Energiequellen anhand des zumindest einen Solltemperaturverlaufs der Kerntemperatur sowie der Ist-Temperatur der Kerntemperatur unter Berücksichtigung der einzubringenden Gesamtenergie derart, dass die einzubringende Gesamtenergie eingehalten wird.

Der Grundgedanke der Erfindung ist es, die zum Erreichen des gewünschten Garergebnisses notwendige Energiemenge auf die einzelnen Energiequellen während des Garprozesses dynamisch, d.h. in Abhängigkeit der Kerntemperatur des Garguts, aufzuteilen. Ergibt sich beim Bestimmen der Kerntemperatur, dass diese unter einer aktuellen Solltemperatur liegt, so kann die Energieabgabe der Energiequelle mit höherer Eindringtiefe erhöht bzw. die Energiequelle mit höherer Eindringtiefe entsprechend hochgeregelt werden. Gleichzeitig kann die mittels der anderen Energiequelle(n) eingebrachte Energie und/oder die Garzeit entsprechend angepasst werden, sodass die einzubringende Gesamtenergie eingehalten wird. So wird sichergestellt, dass die gewünschte äußere Gare sowie die gewünschte innere Gare zeitgleich erreicht werden. Anders ausgedrückt ist es erfindungsgemäß vorgesehen, die Kerntemperatur des Garguts während des Garvorgangs als Referenzgröße heranzuziehen, um hierüber Informationen über die innere Gare des Garguts zu erhalten. Basierend auf den gewonnenen Informationen wird dann wenigstens eine der beiden Energiequellen geregelt, um sicherzustellen, dass das Gargut gleichzeitig das gewünschte Garergebnis erreicht, was sowohl die innere Gare als auch die äußere Gare betrifft. Dies wird gewährleistet, da die in das Gargut insgesamt einzubringende Gesamtenergie, also die insgesamt durch die Energiequellen einzubringende Menge an Energie, nach Abschluss des Garvorgangs in das Gargut eingebracht worden ist. Hierbei kann die im gewählten Garpfad vorgesehene Garzeit unverändert bleiben oder verändert werden.

Insbesondere kann das Auswählen des Garpfads beinhalten, dass ein gewünschtes Garergebnis, Ist- oder Sollparameter des Garguts, insbesondere der inneren und/oder äußeren Gare, ein Garguttyp, oder/oder eine gewünschte Garzeit vorgegeben werden. Aus einem oder mehreren dieser Einstellparameter wird dann der abzuarbeitende Garpfad ausgewählt bzw. ein hinterlegter Garpfad aufgrund der eingestellten Einstellparameter modifiziert.

Der Garpfad umfasst dabei zumindest eine in das Gargut einzubringende Gesamtenergie und einen Solltemperaturverlauf eines Gargutkerns. Selbstverständlich ist dies nicht einschränkend zu verstehen. Der Gargutpfad kann weitere Vorgaben und/oder Parameter umfassen, beispielsweise einen gewünschten Oberflächentemperaturverlauf, einen Solltemperaturverlauf im Garraum oder eine gewünschte Garraumatmosphäre mit einer definierten Luftfeuchtigkeit.

Die vom Garpfad umfassten Sollwerte und/oder Sollverläufe können dabei bereits hinterlegt sein, beispielsweise in einem Speicher des Gargeräts.

Grundsätzlich sind in einem Garprogramm, welches von einem Prozessor des Gargeräts während des Garvorgangs abgearbeitet wird, Ansteuerungsbefehle für Komponenten des Gargeräts hinterlegt. Die Ansteuerungsbefehle werden von dem Prozessor umgesetzt, der daraufhin die Komponenten des Gargeräts ansteuert. Das heißt, durch Ansteuerung eines Dampfgenerators, eines Lüfters und/oder einer Heißluftquelle wird beispielsweise die Garraumatmosphäre bzw. die Temperatur im Garraum eingestellt, insbesondere entsprechend den Sollwerten und/oder Sollverläufen.

Ein Aspekt der Erfindung sieht vor, dass der Garpfad eine dem Solltemperaturverlauf zugeordnete Garzeit hat, wobei eine gewünschte Garzeit einstellbar ist, basierend auf der der Garvorgang durchgeführt wird, insbesondere wobei die gewünschte Garzeit durch eine Nutzereingabe und/oder durch Auswahl erfolgt. So kann der Garprozess und die Gardauer auf technisch einfache Weise beeinflusst werden, ohne Einbußen in der Qualität des Garprodukts hinnehmen zu müssen.

Hierbei kann insbesondere vorgesehen sein, dass die Regelung der mindestens einen Energiequelle in Abhängigkeit der gewünschten Garzeit so erfolgt, dass die einzubringende Gesamtenergie, die durch den ausgewählten Garpfad vorgegeben ist, in der gewünschten Garzeit erreicht wird. Dadurch wird sichergestellt, dass das gewünschte Garergebnis zur gewünschten Zeit, also weder zu spät noch zu früh, vorliegt. Das Gargerät, insbesondere der Prozessor des Gargeräts, verarbeitet die Informationen also derart, dass die Komponenten, insbesondere die Energiequellen, derart angesteuert werden, dass die einzubringende Gesamtenergie in der gewünschten Garzeit eingebracht wird.

Es ist denkbar, dass einem Nutzer hierbei eine minimale Garzeit als Vorgabeauswahl angeboten und/oder angezeigt wird. Bei der minimalen Garzeit kann es sich insbesondere um eine Zeit handeln, bei deren Unterschreiten es zu Qualitätseinbußen der inneren oder äußeren Gare kommt. Insbesondere kann die minimale Garzeit vom Garguttyp, dem Gargutkaliber sowie der Wärmeleitfähigkeit des Garguts abhängen.

Sollte die gewünschte Garzeit unterhalb einer technisch möglichen Garzeit liegen, also unterhalb der minimalen Garzeit, die das gewünschte Garergebnis garantiert, so wird eine Warnmeldung ausgegeben und/oder die Eingabe wird nicht angenommen. Hierdurch erhält ein Nutzer direkte Rückmeldung, dass die gewünschte Garzeit unterhalb der technisch möglichen Garzeit liegt, also unterhalb der minimalen Garzeit. Entweder wählt der Nutzer daraufhin einen anderen Garpfad aus, der beispielsweise einen anderen Gargrad und/oder eine andere Menge umfasst, oder der Nutzer erhöht die gewünschte Garzeit, insbesondere zumindest auf die minimale Garzeit.

Wenn die minimale Garzeit angegeben wird, bekommt der Nutzer zudem direkt eine Richtzeit als Information.

In einer bevorzugten Ausführungsvariante des Verfahrens ist zumindest eine der Energiequellen eine Mikrowellenquelle, die eine höhere Eindringtiefe in das Gargut hat als die andere(n) Energiequelle(n). So kann auf technisch einfache Weise gezielt der Gargutkern erwärmt werden. Außerdem erlaubt der Einsatz von Mikrowellenquellen, insbesondere halbleiterbasierten sogenannten "Solid State Microwave Generators" (SSMG), durch die Erfassung rücklaufender und/oder reflektierter Mikrowellen, Informationen bezüglich des im Garraum befindlichen Garguts zu gewinnen. Es kann hierüber die Energieabsorption des Garguts bestimmt werden, insbesondere die Absorption der von der Mikrowellenquelle eingebrachten Energie.

Um den Garvorgang zu beschleunigen, kann im Verfahren vorgesehen sein, dass der Energieanteil der Mikrowellenquelle an der Gesamtenergie vergrößert wird, wenn eine Beschleunigung des Garvorgangs gewünscht ist. Hierdurch kann eine schnellere Erwärmung des Gargutkerns erreicht werden, da die Energie kernnäher eingebracht wird, also mit einer größeren Eindringtiefe. Es wird unter anderem Zeit, die ansonsten für Wärmeleitung in Richtung des Gargutkerns aufgewendet werden müsste, eingespart. Zudem wird sichergestellt, dass nur der Gargutkern diese Energie absorbiert, wodurch ein gezieltes Garen des Garguts möglich ist.

Insbesondere wird der Energieanteil der Mikrowellenquelle an der Gesamtenergie größer als ein vorgegebener Standardwert des Garpfads, wenn die gewünschte Garzeit kürzer als die vom Garpfad vorgegebene Garzeit ist, die dem Solltemperaturverlauf zugeordnet ist, vorzugsweise wird der Energieanteil der Mikrowellenquelle an der Gesamtenergie maximiert, wenn eine minimale Garzeit als gewünschte Garzeit vorgesehen ist. Auf diese Weise kann ein besonders zeiteffizienter Garprozess realisiert werden.

Ein weiterer Aspekt der Erfindung sieht vor, dass ein Verhältnis der jeweiligen Energieanteile der Energiequellen an der Gesamtenergie variabel ist, insbesondere wobei die Energiequellen jeweils einen vom Garpfad vorgegebenen Energieanteil für eine vom Garpfad vorgegebene Garzeit haben. Hierdurch wird eine einfache und genaue Prozesskontrolle erreicht.

Ferner kann vorgesehen sein, dass eine vom Solltemperaturverlauf der Kerntemperatur festgestellte Abweichung der Ist-Temperatur der Kerntemperatur zur Folge hat, dass eine Energiequelle mit geringerer Eindringtiefe derart angesteuert wird, dass sich ihr Energieanteil an der Gesamtenergie erhöht. Alternativ wird eine Energiequelle mit höherer Eindringtiefe derart angesteuert, dass sich ihr Energieanteil an der Gesamtenergie verringert.

Im ersten Fall wird also auf die erhöhte Kerntemperatur mit einer Erhöhung der Energie der Energiequelle geringerer Eindringtiefe reagiert. Dadurch wird das Erreichen der gewünschten äußeren Gare ebenfalls beschleunigt, sodass die innere Gare und die äußere Gare gleichzeitig den gewünschten Zustand haben. Es ergibt sich insgesamt also ein schnellerer Garvorgang.

Alternativ kann auf die erhöhte Kerntemperatur mit einer Verringerung der Energie der Energiequelle höherer Eindringtiefe, beispielsweise der Mikrowellenquelle, reagiert werden. Durch die Verringerung wird die Kerntemperatur wieder an den Sollwert angepasst bzw. passt sich die Kerntemperatur dem Solltemperaturverlauf der Kerntemperatur an. Es bleibt bei der vom Garpfad vorgegebenen Garzeit.

Weiterhin kann vorgesehen sein, dass die Gesamtenergie und/oder ein Energiemengenverhältnis der verschiedenen Energiequellen anhand eines gewünschten Garergebnisses und/oder eines Gargutkalibers bestimmt wird. Die Berücksichtigung dieser Parameter ermöglicht eine präzisere Prozesskontrolle und verbessert die Qualität des Garergebnisses.

Ferner wird die Aufgabe erfindungsgemäß gelöst durch ein Gargerät mit einem Garraum, zumindest zwei unterschiedlichen Energiequellen und einer Steuer- und/oder Regeleinheit, welche dazu ausgebildet und eingerichtet ist, ein erfindungsgemäßes Verfahren durchzuführen.

Die Vorteile und Eigenschaften, die zum Verfahren diskutiert wurden, gelten selbstverständlich auch für das erfindungsgemäße Gargerät in entsprechender Weise, weswegen auf diese Bezug genommen wird.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung eines erfindungsgemäßen Gargeräts, das im gezeigten Beispiel mit einem einstückigen Gargut beladen ist;

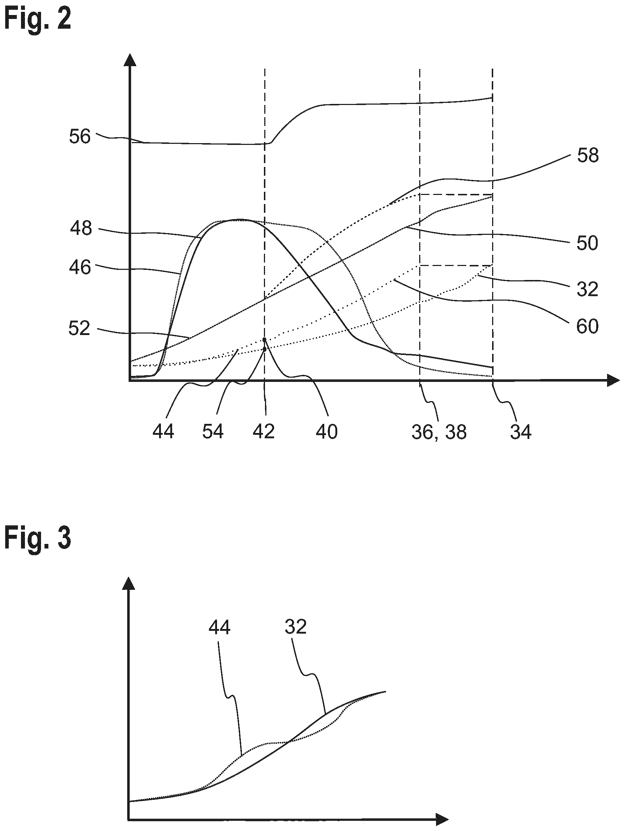

- Fig. 2 ein Diagramm, in dem ein Solltemperaturverlauf, ein bisheriger Ist-Temperaturverlauf sowie ein vorgesehener zukünftiger Temperaturverlauf eines Gargutkerns, ein Sollheizleistungsverlauf, ein bisheriger Ist-Heizleistungsverlauf sowie ein vorgesehener zukünftiger Heizleistungsverlauf einer Mikrowellenquelle, ein Sollbräunungsverlauf, ein bisheriger Ist-Bräunungsverlauf sowie ein vorgesehener zukünftiger Bräunungsverlauf einer Gargutoberfläche und ein bisheriger Ist-Temperaturverlauf sowie ein vorgesehener zukünftiger Temperaturverlauf eines Garraums über eine Garzeit aufgetragen sind; und
- Fig. 3 ein weiteres Diagramm, in dem ein Solltemperaturverlauf sowie ein tatsächlicher Ist-Temperaturverlauf eines Gargutkerns über einen Garzeitbereich aufgetragen ist.

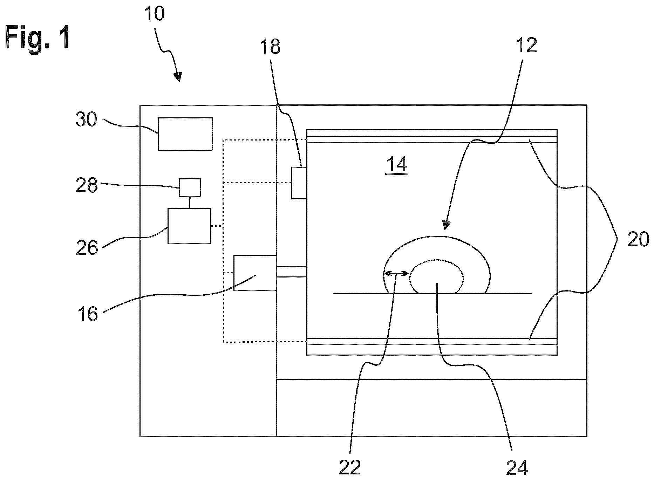

In Figur 1 ist ein Gargerät 10 zum Garen eines Garguts 12 gezeigt. Das Gargerät 10 weist einen Garraum 14, mindestens eine Mikrowellenquelle, die als erste Energiequelle 16 fungiert, und eine Konvektionsheizquelle auf, die als zweite Energiequelle 18 fungiert. Alternativ oder zusätzlich kann das Gargerät 10 über weitere Energiequellen verfügen, beispielsweise Infrarotheizquellen 20.

Die Mikrowellenquelle 16 umfasst im Ausführungsbeispiel zumindest einen Halbleiter-Mikrowellengenerator ("Solid State Microwave Generator" (SSMG), welcher Mikrowellen erzeugen kann, also elektromagnetische Strahlung. Die Mikrowellen können dabei eine Frequenz aufweisen, bei der sie bis in eine Tiefe von über 1 cm, vorzugsweise 2 bis 3 cm in das Gargut 12 eindringen können. Die Mikrowellenquelle 16 weist also eine entsprechende Eindringtiefe 22 auf, die über 1 cm ist, vorzugsweise 2 bis 3 cm. Beispielsweise beträgt die Frequenz zwischen 2,1 GHz und 2,8 GHz, insbesondere ca. 2,4 GHz bzw. 2,45 GHz. Durch die hohe Eindringtiefe 22 kann mittels der Mikrowellen ein Gargutkern 24 und/oder ein Bereich nahe des Gargutkerns 24 erwärmt werden.

Selbstverständlich kann die Mikrowellenquelle 16 weitere Komponenten umfassen, beispielsweise einen Richtkoppler, einen Modulator, einen Verstärker, einen Demodulator und/oder einen Regler (nicht gezeigt).

Alternativ zum Halbleiter-Mikrowellengenerator kann auch ein Magnetron vorgesehen sein, das die Mikrowellen erzeugt.

Die Konvektionsheizquelle 18 ist dagegen dazu ausgebildet, eine Atmosphäre im Garraum 14 zumindest zu beeinflussen oder auszubilden. Dies ist möglich, da die Konvektionsheizquelle 18 die Luft im Garraum 14 erwärmt. Zusätzlich kann noch ein Lüfter und/oder Dampfgenerator vorgesehen sein, wodurch die Luft im Garraum 14 umgewälzt und/oder deren Feuchtigkeit eingestellt werden kann, wodurch die Garatmosphäre eingestellt wird. In einem einfachen Ausführungsbeispiel kann die Konvektionsheizquelle 18 die Luft im Garraum 14 lediglich heizen, um die Garatmosphäre einzustellen. Da das Gargut 12 mit seiner Oberfläche der Atmosphäre ausgesetzt ist, kann mittels der Konvektionsheizquelle 18 insbesondere die Gargutoberfläche und/oder Kruste des Garguts 12 erwärmt werden.

Mittels einer optional vorhandenen Infrarotheizquelle 20 können insbesondere oberflächennahe Bereiche des Garguts 12 bis in wenige Millimeter Eindringtiefe 22 erwärmt werden. Im gezeigten Ausführungsbeispiel sind zwei Infrarotheizquellen 20 vorgesehen, die gegenüberliegenden Seiten des Garraums 14 zugeordnet sind, nämlich einem Boden und einer Decke des Garraums 14, um das eingebrachte Gargut 12 von seiner Unterseite und seiner Oberseite zu erwärmen.

Grundsätzlich hat die Infrarotheizquelle 20 eine geringere Eindringtiefe 22 als die Mikrowellenquelle 16, aber eine größere Eindringtiefe 22 als die Konvektionsheizquelle 18.

Selbstverständlich können die Konvektionsheizquelle 18 und die optionale Infrarotheizquelle 20 ebenfalls dazu genutzt werden, den Gargutkern 24 zu erwärmen. Allerdings setzt dies im Vergleich zum Einsatz der Mikrowellen eine längere Zeitdauer voraus, da die Wärmeenergie zunächst weiter außen am Gargut 12 eingebracht wird und sich erst aufgrund von Wärmeleitung in Richtung des Gargutkerns 24 ausbreiten muss.

Weiterhin weist das Gargerät 10 eine Steuer- und/oder Regeleinheit 26, eine Prozessoreinheit (nicht gezeigt) einen Speicher 28 und eine Ein- und Ausgabevorrichtung 30, insbesondere einen (berührungsempfindlichen) Bildschirm, auf.

Die Prozessoreinheit kann Teil der Steuer- und/oder Regeleinheit 26 sein.

In dem Speicher 28 ist im Ausführungsbeispiel ein Computerprogramm mit Programmcodemitteln abgelegt. Wenn das Computerprogramm durch die Prozessoreinheit des Gargeräts 10 ausgeführt wird, veranlasst es die Steuer- und/oder Regeleinheit 26 dazu, ein Verfahren zum Garen eines Garguts 12 mit zumindest zwei verschiedenen Energiequellen 16, 18 durchzuführen. Dieses Verfahren wird nachfolgend näher beschrieben. Die Programmcodemittel werden demnach durch die Steuer- und/oder Regeleinheit 26 in Ansteuerungsbefehle für die Komponenten des Gargeräts 10 umgesetzt.

Zu Verfahrensbeginn wird ein Gargut 12 in den Garraum 14 des Gargerätes 10 eingebracht oder befindet sich bereits in diesem.

In einem ersten Schritt des Verfahrens wird ein Garpfad ausgewählt, mit dem das Gargut 12 gegart werden soll.

Die Auswahl kann dabei insbesondere durch einen Nutzer erfolgen, beispielsweise indem der Nutzer Eingaben mittels der Ein- und Ausgabevorrichtung 30 macht.

Der ausgewählte Garpfad umfasst vorliegend eine einzubringende Gesamtenergie, die durch die mindestens zwei verschiedenen Energiequellen 16, 18 in das Gargut 12 einzubringen ist. Das bedeutet, die Auswahl des Garpfads hat zur Folge, dass eine einzubringende Gesamtenergie festgelegt wird, die in das Gargut 12 eingebracht werden muss, um ein gewünschtes Garergebnis zu erhalten, das mit dem ausgewählten Garpfad verknüpft ist.

Die Gesamtenergie sowie die Anteile der verschiedenen Energiequellen 16, 18 können dabei im Speicher 28 als Standardwerte hinterlegt sein und in Abhängigkeit des gewünschten Garergebnis sowie eines vorliegenden Gargutkalibers abgerufen werden.

Der Gargutkaliber kann hierbei insbesondere durch die Masse, das Volumen und die Form des Garguts 12 spezifiziert sein. Er kann durch den Nutzer vorgegeben oder sensorisch bestimmt werden, beispielsweise durch Auswertung von Mikrowellen mittels der Halbleiter-Mikrowellenquelle 16 in einem Sensorbetrieb, insbesondere Auswertung vorwärtslaufender und rückwärtslaufender Wellen.

Wird beispielsweise ein dünnes Gargut 12 gegart, bei dem eine ausgeprägte Krustenbildung gewünscht ist, so kann es vorteilhaft sein, einen hohen Anteil an der notwendigen Gesamtenergie mittels der Konvektionsheizquelle 18 einzubringen. Denn hierdurch kann eine verstärkte Aufheizung der Gargutoberfläche erreicht werden, welche zu einer Wasserverdampfung aus der Gargutoberfläche und so zur gewünschten Krustenbildung führt.

Wird dagegen ein vergleichsweise dickes Gargut 12 gegart und/oder eine geringere Krustenbildung gewünscht, kann vorgesehen sein, dass die notwendige Gesamtenergie überwiegend durch die Mikrowellenquelle 16 bereitgestellt wird, beispielsweise um den Gargutkern 24 möglichst schnell zu erwärmen.

Das Verhältnis der jeweiligen Energieanteile der Energiequellen 16, 18 zueinander oder an der Gesamtenergie kann dabei variabel sein und sich während des Garprozesses verändern.

In jedem Fall kann dies im ausgewählten Garpfad hinterlegt sein.

Ferner umfasst der Garpfad einen Solltemperaturverlauf 32 des Gargutkerns 24, der ebenfalls im Speicher 28 abgelegt sein kann. Analog zum Gesamtenergieeintrag kann auch der Solltemperaturverlauf 32 von der Art des Garguts 12, dem Gargutkaliber sowie dem gewünschten Garergebnis abhängig sein.

Der Solltemperaturverlauf 32 kann dabei auch mit dem Verhältnis der Energieanteile korreliert sein. Ist beispielsweise gemäß Solltemperaturverlauf 32 ein rascher Anstieg der Kerntemperatur vorgesehen, so kann dies durch eine hohe temporäre oder andauernde Heizleistung der Mikrowellenquelle 16 erreicht werden.

Figur 2 zeigt ein Diagramm, in dem unter anderem ein möglicher Solltemperaturverlauf 32 für den Gargutkern 24 des Garguts 12 über der Gardauer schematisch dargestellt ist.

In Figur 2 ist außerdem eine vorgesehene Garzeit 34 dargestellt, welche dem Solltemperaturverlauf 32 zugeordnet ist und dessen Endpunkt markiert. Insofern ist eine gewünschte Gargutkerntemperatur durch den Solltemperaturverlauf 32 und die Garzeit 34 definiert.

Die Garzeit 34 kann beispielsweise durch den Garpfad vorgegeben sein. Im Ausführungsbeispiel handelt es sich hierbei ebenfalls um einen aus dem Speicher 28 abrufbaren Wert.

Es kann auch vorgesehen sein, dass die Steuer- und/oder Regeleinheit 26 basierend auf Nutzereingaben und/oder einer Gargutcharakterisierung eine minimale Garzeit 36 errechnet, welche dem Nutzer mittels der Ein- und Ausgabevorrichtung 30 zur Auswahl angeboten wird. Die Gargutcharakterisierung kann in diesem Zusammenhang beispielsweise durch Auswertung der Mikrowellen mittels der Halbleiter-Mikrowellenquelle 16 erfolgen.

Wenn sich aus der Nutzereingabe ergibt, dass die gewünschte Garzeit 38 kürzer als die vom Garpfad vorgegebene Garzeit 34 ist, so kann ein Energieanteil der Mikrowellenquelle 16 an der Gesamtenergie vorgesehen werden, der größer ist, als der im Garpfad vorgesehene Standardwert. Vorzugsweise wird der Energieanteil der Mikrowellenquelle 16 an der Gesamtenergie maximiert, wenn eine minimale Garzeit 36 als gewünschte Garzeit 38 vorgegeben ist.

Es kann grundsätzlich vorgesehen sein, dass im Speicher 28 ein Standard-Garpfad abgelegt ist, wobei dieser aufgrund von Eingaben des Nutzers angepasst wird, um einen modifizierten Garpfad zu erhalten, der während des Garvorgangs abzuarbeiten ist.

Dies bedeutet, dass ein gewünschtes Garergebnis, eine abweichende Menge von Gargut 12 und/oder andere Abweichungen von Parametern dazu führen können bzw. kann, dass der hinterlegte Standard-Garpfad modifiziert wird, sodass aufgrund der entsprechenden Eingaben dann der modifizierte Garpfad ausgewählt wird, der dem ausgewählten Garpfad entspricht.

Im Ausführungsbeispiel wird im Anschluss an die Garpfadauswahl mit dem Garprozess begonnen.

Während des ablaufenden Garvorgangs wird in einem zweiten Verfahrensschritt eine Ist-Temperatur 40 des Gargutkerns 24 bestimmt. Dies kann beispielsweise mittels eines Kerntemperaturthermometers erfolgen. Alternativ oder zusätzlich kann die Kerntemperatur auch durch Auswertung der Mikrowellen erfolgen, beispielsweise indem bekannte temperatur- und/oder garzustandsabhängige Mikrowellenabsorptionswerte, bzw. Absorptionskoeffizienten herangezogen und mit der tatsächlich bestimmten Mikrowellenabsorption im Gargut 12 verglichen werden. Hierüber kann darauf geschlossen werden, wieviel Energie, insbesondere wieviel der von der Mikrowellenquelle 16 eingebrachten Energie, vom Gargutkern 24 absorbiert wird, was einen Rückschluss auf die Kerntemperatur ermöglicht.

Vorzugsweise wird die Ist-Temperatur 40 des Gargutkerns 24 zu mehreren verschiedenen Zeitpunkten, beispielsweise in vorgegebenen Zeitabständen, oder während des Garprozesses kontinuierlich bzw. periodisch bestimmt. Dies kann durch mehrmaliges Wiederholen von Schritt 2 über die gesamte Dauer des Garprozesses erfolgen. In Figur 2 ist zur Vereinfachung lediglich ein Bestimmungszeitpunkt 42 sowie der bisherige im Garvorgang tatsächlich erzielte Ist-Temperaturverlauf 44 des Gargutkerns 24 dargestellt.

In einem dritten Verfahrensschritt wird mindestens eine der Energiequellen 16, 18, anhand des Solltemperaturverlaufs 32 der Kerntemperatur sowie der Ist-Temperatur 40 des Gargutkerns 24 geregelt. Die Regelung muss dabei selbstverständlich nicht auf eine Energiequelle 16, 18 eingeschränkt sein. Vorzugsweise werden alle am Garvorgang beteiligten Energiequellen 16, 18 geregelt.

Die Regelung erfolgt dabei unter Berücksichtigung der einzubringenden Gesamtenergie derart, dass die einzubringende Gesamtenergie eingehalten wird. Dadurch wird gewährleistet, dass die gewünschte äußere Gare sowie die gewünschte innere Gare des Garguts 12 erreicht wird.

Im Ausführungsbeispiel ist außerdem vorgesehen, dass die Regelung der Energiequellen 16, 18 unter Berücksichtigung der gewünschten Garzeit 38 erfolgt, und zwar so, dass die einzubringende Gesamtenergie, die durch den ausgewählten Garpfad vorgegeben ist, in der gewünschten Garzeit 38 in das Gargut 12 eingebracht wird.

Figur 2 zeigt neben den Kerntemperaturverläufen 32, 44 auch einen Sollheizleistungsverlauf 46 der Mikrowellenquelle 16, durch welchen der Solltemperaturverlauf 32 des Gargutkerns 24 eingestellt werden kann. Bei dem Sollheizleistungsverlauf 46 kann es sich ebenfalls um einen vom Garpfad umfassten Standardwert handeln, welcher aus dem Speicher 28 abrufbar ist.

Ferner ist in Figur 2 ein bisher tatsächlich eingebrachter Ist-Heizleistungsverlauf 48 der Mikrowellenquelle 16 sowie ein Sollbräunungsverlauf 50 und ein bisheriger Ist-Bräunungsverlauf 52 über der Garzeit dargestellt. Bei den Bräunungsverläufen 50, 52 kann es sich insbesondere um Darstellungen von Farbveränderungen der Gargutoberfläche oder um einen Verlauf einer aus dem Gargut 12 abgedampften Flüssigkeitsmenge über der Garzeit handeln.

Wird in Verfahrensschritt 2 festgestellt, dass eine vorliegende Ist-Temperatur 40 des Gargutkerns 24 von der aktuellen Solltemperatur 54 nach oben hin abweicht, so wird eine der Energiequellen 18 mit geringerer Eindringtiefe 22 derart angesteuert, dass sich ihr Energieanteil an der Gesamtenergie erhöht.

Im Ausführungsbeispiel wird dies durch eine Erhöhung der Heizleistung der Konvektionsheizquelle 18 bewirkt, was wiederum zu einer Erhöhung der Garraumtemperatur 56 führt.

Infolgedessen steigt auch die Wasserverdampfung aus der Gargutoberfläche, wodurch die Bräunung beschleunigt wird. Dadurch ergibt sich im Ausführungsbeispiel ein vorgesehener zukünftiger Bräunungsverlauf 58, welcher oberhalb des durch den Garpfad vorgegebenen Sollbräunungsverlaufs 50 liegt.

Auch der vorgesehene zukünftige Verlauf 60 der Kerntemperatur des Garguts 12 kann in diesem Beispiel über dem Solltemperaturverlauf 32 des Garpfads liegen, da der in Schritt 2 festgestellten Abweichung zwischen der Ist-Temperatur 40 und der Solltemperatur 54 des Gargutkerns 24 nicht entgegengewirkt wurde, sondern vielmehr die für die äußere Gare zuständige Energiequelle 18 nachgeregelt wurde.

Infolgedessen werden die gewünschte äußere Gare und die innere Gare zeitgleich erreicht, und zwar zu dem Zeitpunkt, an dem die gewünschte kurze Garzeit 38 erreicht ist. Mit anderen Worten wird der Garvorgang beschleunigt.

Alternativ kann auf die in Verfahrensschritt 2 festgestellte Abweichung der Ist-Temperatur 40 des Gargutkerns 24 von der aktuellen Solltemperatur 54 dadurch reagiert werden, dass eine Energiequelle 16 mit höherer Eindringtiefe 22 derart angesteuert wird, dass sich ihr Energieanteil an der Gesamtenergie verringert.

Im Ausführungsbeispiel wird dies durch eine Verringerung der Heizleistung der Mikrowellenquelle 16 bewirkt. Dadurch wird der festgestellten Kerntemperaturabweichung entgegengewirkt. Dieser Vorgang ist in Figur 3 anhand des Solltemperaturverlaufs 32 sowie des Ist-Temperaturverlaufs 44 des Gargutkerns 24 gezeigt. Die Regelung des Ist-Temperaturverlaus 44 kann dabei beispielsweise mittels eines Proportionalreglers, eines Integralreglers, eines Proportional/Integralreglers oder vergleichbaren Reglern erfolgen.

Infolgedessen wird der Garvorgang so weitergeführt, dass der tatsächliche Kerntemperaturverlauf 44 dem Solltemperaturverlauf 32 in guter Näherung entspricht. Beispielhaft ist dies in Figur 3 gezeigt, woraus hervorgeht, dass die Mikrowellenquelle 16 stets geregelt wird, um den Temperaturverlauf der Kerntemperatur an den Solltemperaturverlauf 32 anzugleichen.

Dasselbe gilt auch für den Sollbräunungsverlauf 50 und den tatsächlichen Bräunungsverlauf 52. Die gewünschte äußere Gare und die innere Gare werden auch in diesem Fall zeitgleich erreicht, und zwar zu dem gemäß Garpfad ursprünglich vorgegebenen Zeitpunkt.

Ebenso kann aber auch festgestellt werden, dass die aktuelle Kerntemperatur des Gargutkerns 24 unterhalb des Solltemperaturverlaufs 32 liegt. In dem Fall kann die Leistung der Konvektionsheizquelle 18 verringert werden, wodurch sich die Garzeit entsprechend verlängert, sodass die einzubringende Gesamtenergie erreicht wird und gleichzeitig sichergestellt ist, dass die innere Gare und die äußere Gare gleichzeitig erreicht werden.

Alternativ kann vorgesehen sein, dass die Mikrowellenquelle 16 derart geregelt wird, dass die Leistung erhöht wird, sodass verhältnismäßig mehr Energie in das Gargut 12 durch die Mikrowellenquelle 16 eingebracht wird. Damit die Gesamtenergie dennoch eingehalten wird, wird die Leistung der Konvektionsheizquelle 18 dann reduziert. Die zuvor definierte Garzeit kann in dem Fall eingehalten werden.

Grundsätzlich stehen bei der Regelung somit zwei Möglichkeiten zur Verfügung, da entweder die Garzeit verändert wird, beispielsweise verkürzt oder verlängert, um das ursprünglich eingestellte Energieverhältnis der Energieanteile der zumindest zwei Energiequellen 16, 18 aufrecht zu erhalten, oder das Verhältnis der Energieanteile der zumindest zwei Energiequellen 16, 18 wird verändert, um die ursprünglich eingestellte Garzeit beizubehalten.

Der Nutzer kann beispielsweise zu Beginn einstellen, ob die gewünschte Garzeit, sofern sie zumindest der minimalen Garzeit entspricht, eingehalten werden soll, ob das zu Beginn definierte Verhältnis der Energieanteille der zumindest zwei Energiequellen 16, 18 eingehalten werden soll, oder ob sowohl die Garzeit als auch das Verhältnis der Energieanteille flexibel angepasst werden sollen.

In jedem Fall wird die einzubringende Gesamtenergie eingehalten, welche durch den ausgewählten Garpfad vorgegeben ist.

## Patentansprüche

1. Verfahren zum Garen eines Garguts (12) mit zumindest zwei verschiedenen Energiequellen (16, 18) zum Garen des Garguts (12), deren Energieeintrag in das Gargut (12) eine unterschiedliche Eindringtiefe (22) hat, umfassend die Schritte:
- Auswählen eines Garpfads, mit dem das zu garende Gargut (12) gegart wird, wobei der Garpfad eine einzubringende Gesamtenergie umfasst, die durch die zumindest zwei verschiedenen Energiequellen (16, 18) in das Gargut (12) einzubringen ist, und wobei der Garpfad einen Solltemperaturverlauf (32) eines Gargutkerns (24) umfasst;
- Bestimmen einer Ist-Temperatur (40) des Gargutkerns (24) während eines ablaufenden Garvorgangs; und
- Regeln mindestens einer der beiden Energiequellen (16, 18) anhand des zumindest einen Solltemperaturverlaufs (32) der Kerntemperatur sowie der Ist-Temperatur (40) der Kerntemperatur unter Berücksichtigung der einzubringenden Gesamtenergie derart, dass die einzubringende Gesamtenergie eingehalten wird.

2. Verfahren nach Anspruch 1, wobei der Garpfad eine dem Solltemperaturverlauf (32) zugeordnete Garzeit (34) hat, wobei eine gewünschte Garzeit (38) einstellbar ist, basierend auf der der Garvorgang durchgeführt wird, insbesondere wobei die Vorgabe der gewünschten Garzeit (38) durch eine Nutzereingabe und/oder durch Auswahl erfolgt.

3. Verfahren nach Anspruch 2, wobei die Regelung der mindestens einen Energiequelle (16, 18) in Abhängigkeit der gewünschten Garzeit (38) erfolgt, sodass die einzubringende Gesamtenergie, die durch den ausgewählten Garpfad vorgegeben ist, in der gewünschten Garzeit (38) erreicht wird.

4. Verfahren nach einem der Ansprüche 2 oder 3, wobei einem Nutzer eine minimale Garzeit (36) als Vorgabeauswahl angeboten und/oder angezeigt wird.

5. Verfahren nach einem der vorhergehenden Ansprüche, wobei zumindest eine der Energiequellen eine Mikrowellenquelle (16) ist, die eine höhere Eindringtiefe (22) in das Gargut (12) als die andere Energiequelle (18) hat.

6. Verfahren nach Anspruch 5 soweit rückbezogen auf Anspruch 2, wobei der Energieanteil der Mikrowellenquelle (16) an der Gesamtenergie vergrößert wird, wenn eine Beschleunigung des Garvorgangs gewünscht ist, insbesondere wird der Energieanteil der Mikrowellenquelle (16) an der Gesamtenergie größer als ein vorgegebener Standardwert des Garpfads, wenn die gewünschte Garzeit (38) kürzer als die vom Garpfad vorgegebene Garzeit (34) ist, die dem Solltemperaturverlauf (32) zugeordnet ist, vorzugsweise wird der Energieanteil der Mikrowellenquelle (16) an der Gesamtenergie maximiert, wenn eine minimale Garzeit (36) als gewünschte Garzeit (38) vorgesehen ist.

7. Verfahren nach einem der vorhergehenden Ansprüche, wobei ein Verhältnis der jeweiligen Energieanteile der Energiequellen (16, 18) an der Gesamtenergie variabel ist, insbesondere wobei die Energiequellen (16, 18) jeweils einen vom Garpfad vorgegebenen Energieanteil für eine vom Garpfad vorgegebene Garzeit haben.

8. Verfahren nach einem der vorhergehenden Ansprüchen, wobei eine vom Solltemperaturverlauf (32) der Kerntemperatur festgestellte Abweichung der Ist-Temperatur (40) der Kerntemperatur zur Folge hat, dass eine Energiequelle (18) mit geringerer Eindringtiefe (22) derart angesteuert wird, dass sich ihr Energieanteil an der Gesamtenergie erhöht, oder dass eine Energiequelle (16) mit höherer Eindringtiefe (22) derart angesteuert wird, dass sich ihr Energieanteil an der Gesamtenergie verringert.

9. Verfahren nach einem der vorhergehenden Ansprüchen, wobei die Gesamtenergie und/oder ein Energiemengenverhältnis der verschiedenen Energiequellen (16, 18) anhand eines gewünschten Garergebnisses und/oder eines Gargutkalibers bestimmt wird.

10. Gargerät, umfassend einen Garraum (14), zumindest zwei unterschiedliche Energiequellen (16, 18, 20) und eine Steuer- und/oder Regeleinheit (26), welche dazu ausgebildet und eingerichtet ist, ein Verfahren gemäß einem der vorhergehenden Ansprüche durchzuführen.
